# EUROPEAN PATENT SPECIFICATION

(11) **EP 3 835 085 B1**
(45) Date of publication and mention of the grant of the patent: **04.10.2023**
(21) Application number: 20213090.2
(22) Date of filing: 10.12.2020
(51) Int. Cl.: B60C 7/18, B60C 11/04, B60C 11/03, B60C 11/13

(54) **NON-PNEUMATIC TIRE**
LUFTLOSER REIFEN
PNEU NON PNEUMATIQUE

(30) Priority: 13.12.2019 JP 2019225724
(43) Date of publication of application: 16.06.2021
(73) Proprietor: Toyo Tire Corporation, Itami-shi, Hyogo 664-0847 (JP)
(72) Inventor: TAHARA, Hiroshi, Hyogo, Japan 664-0847 (JP)
(74) Representative: Meissner Bolte Partnerschaft mbB

(56) References cited:
- EP-A1- 1 980 420
- EP-A1- 3 178 667
- WO-A1-2019/133000
- DE-A1-102009 003 531
- JP-A- H0 195 910
- JP-A- 2002 036 822
- JP-A- 2002 225 510
- JP-A- 2002 370 510
- US-A1- 2019 184 748

## Description

### TECHNICAL FIELD

The present invention relates to a non-pneumatic tire.

### BACKGROUND ART

Generally, a plurality of grooves is formed on a tread of a tire. In such a tire, so-called stone holding in which stones are caught in the grooves during running sometimes occurs. The stone holding can cause cracks on bottoms of the grooves and sidewalls of the grooves, and can cause vibration and noise. In order to suppress the stone holding, for example, there are measures such as providing protrusions on the bottoms of the grooves as in the following Patent Document 1.

US 2019/0184748 A1 relates to a non-pneumatic tire provided with, as a tire structural member, a support structure for supporting a load from a vehicle and further relates to a non-pneumatic tire usable as a substitute for a pneumatic tire.

Patent Document 1: JP 2016-199 073 A

### SUMMARY OF THE INVENTION

### PROBLEMS TO BE SOLVED BY THE INVENTION

It is an object of the present invention to provide a non-pneumatic tire capable of suppressing the stone holding.

### MEANS FOR SOLVING THE PROBLEMS

According to the invention, the problem is solved by the subject matter outlined in independent claim 1. Advantageous further developments of the invention are set forth in the dependent claims.

### BRIEF DESCRIPTION OF THE DRAWINGS

- FIG. 1: is a front view showing a non-pneumatic tire according to an embodiment of the present invention.
- FIG. 2: is a cross-sectional view taken along a line A-A of the non-pneumatic tire of FIG. 1.
- FIG. 3: is an enlarged view of a main part of the non-pneumatic tire of FIG. 2.
- FIG. 4: is a view of a tread when viewed from an outer circumference thereof.
- FIG. 5: discloses views for explaining the function to discharge a stone.
- FIG. 6: is an enlarged view of a main part of a non-pneumatic tire according to another embodiment.
- FIG. 7: is an enlarged view of a main part of a non-pneumatic tire according to still another embodiment.
- FIG. 8: is an enlarged view of a main part of a non-pneumatic tire according to yet another embodiment.
- FIG. 9: is an enlarged view of a main part of a non-pneumatic tire according to a further embodiment.

### MODE FOR CARRYING OUT THE INVENTION

Hereinafter, an embodiment of a non-pneumatic tire according to the invention will be described with reference to the drawings.

The non-pneumatic tire T includes a support structure SS for supporting a load from a vehicle. The non-pneumatic tire T of the present invention just needs to include such a support structure SS as described above. A member corresponding to a tread, a reinforcing layer, members for accommodation to an axle and a rim, or the like may be provided on an outer side (outer circumference side) and an inner side (inner circumference side) of the support structure SS.

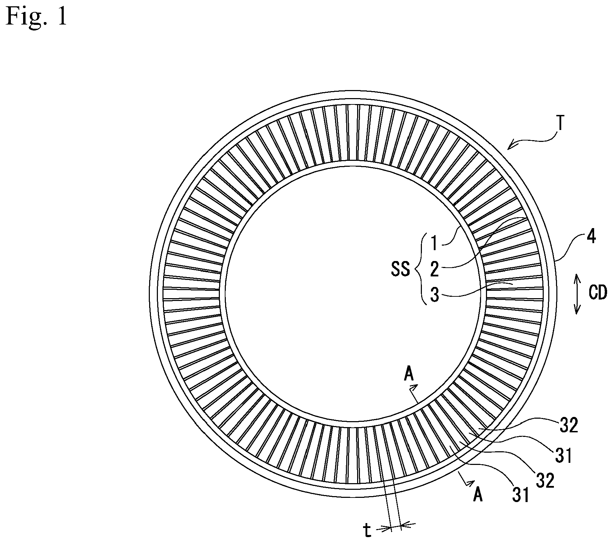

In the present embodiment, as shown in FIG. 1, a tread 4 is provided outside the support structure SS. The tread 4 is made of, for example, rubber as in a conventional pneumatic tire, and includes a pattern (grooves) on an outer circumferential surface thereof as in a conventional pneumatic tire. The support structure SS and the tread 4 are adhered to each other by an adhesive.

As shown in a front view of FIG. 1, in the non-pneumatic tire T of the present embodiment, the support structure SS includes: an inner annular portion 1; an outer annular portion 2 provided concentrically on an outer side of the inner annular portion 1; and a plurality of coupling portions 3 which couple the inner annular portion 1 and the outer annular portion 2 to each other.

The support structure SS in the present invention is formed of an elastic material. From a viewpoint of enabling integral molding at the time of manufacturing the support structure SS, it is preferable that the inner annular portion 1, the outer annular portion 2, and the coupling portion 3 be basically made of the same material except a reinforcing structure.

Moreover, for example, as a base material of the support structure SS, there may be adopted a thermoplastic elastomer such as polyester elastomer, a cross-linked rubber such as natural rubber, or other resins (for example, a thermoplastic resin such as polyethylene resin, and a thermosetting resin such as polyurethane resin). Furthermore, for example, a reinforcing material such as fibers or a metal cord may be embedded inside the base material.

From a viewpoint of improving uniformity, it is preferable that the inner annular portion 1 have a cylindrical shape with a constant thickness. Moreover, on an inner circumferential surface of the inner annular portion 1, it is preferable to provide irregularities and the like for maintaining fitting property in order to mount the non-pneumatic tire T to the axle and the rim. Note that, though the thickness of the inner annular portion 1 is not particularly limited, the thickness is appropriately set from viewpoints of reducing a weight and improving a durability while sufficiently transmitting force to the coupling portion 3.

Although an inner diameter of the inner annular portion 1 is not particularly limited, the inner diameter is appropriately determined according to dimensions of the rim and the axle on which the non-pneumatic tire T is to be mounted, and the like. Although a width of the inner annular portion 1 in a tire width direction WD is not particularly limited, the width is appropriately determined depending on a purpose, a length of the axle, and the like.

From the viewpoint of improving the uniformity, it is preferable that the outer annular portion 2 have a cylindrical shape with a constant thickness. Note that, though the thickness of the outer annular portion 2 is not particularly limited, the thickness is appropriately set from the viewpoints of reducing the weight and improving the durability while sufficiently transmitting force from the coupling portion 3.

Although an inner diameter of the outer annular portion 2 is not particularly limited, the inner diameter is appropriately determined depending on the purpose and the like. Moreover, though a width of the outer annular portion 2 in the tire width direction WD is not particularly limited, the width is appropriately determined depending on the purpose and the like. Note that, preferably, the width of the outer annular portion 2 is the same as the width of the inner annular portion 1.

The coupling portions 3 couple the inner annular portion 1 and the outer annular portion 2 to each other. A plurality of the coupling portions 3 are provided so as to be independent of one another in the tire circumferential direction CD by placing appropriate intervals between the coupling portions 3. Although the number of coupling portions 3 is not particularly limited, the number is appropriately set from viewpoints of reducing the weight, improving power transmission, and improving the durability while sufficiently supporting the load from the vehicle.

The plurality of coupling portions 3 are configured such that first coupling portions 31 and second coupling portions 32 are arrayed along the tire circumferential direction CD. In this case, it is preferable that the first coupling portions 31 and the second coupling portions 32 be arrayed alternately with each other along the tire circumferential direction CD. This makes it possible to further reduce dispersion of the ground contact pressure during tire rolling.

From the viewpoint of improving the uniformity, it is preferable that a pitch in the tire circumferential direction CD between the first coupling portions 31 and the second coupling portions 32 be set constant.

Each of the first coupling portions 31 is extended from one side WD1 in the tire width direction of the inner annular portion 1 toward other side WD2 in the tire width direction of the outer annular portion 2. Meanwhile, each of the second coupling portions 32 is extended from the other side WD2 in the tire width direction of the inner annular portion 1 toward the one side WD 1 in the tire width direction of the outer annular portion 2. That is, the first coupling portion 31 and the second coupling portion 32, which are adjacent to each other, are disposed in a substantially X shape when viewed from the tire circumferential direction CD.

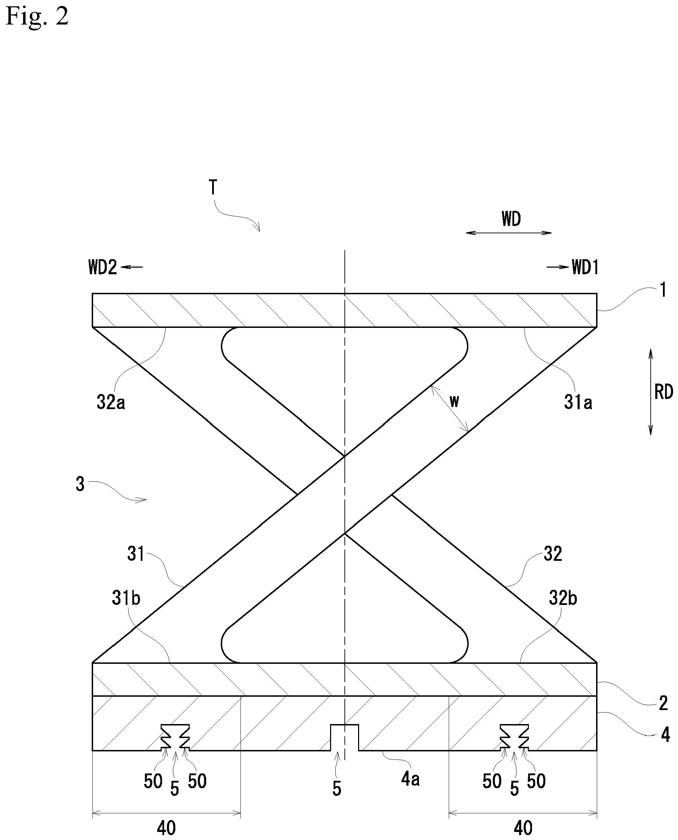

The first coupling portion 31 and the second coupling portion 32 when viewed from the tire circumferential direction CD are preferably symmetric to each other with respect to a tire equatorial plane as shown in FIG. 2. Therefore, hereinafter, the first coupling portion 31 will mainly be described.

The first coupling portion 31 has an elongated plate-like shape extending from the inner annular portion 1 to the outer annular portion 2. In the first coupling portion 31, a plate thickness t is smaller than a plate width w, and a plate thickness direction is oriented to the tire circumferential direction CD. That is, the first coupling portion 31 has a plate shape extending in the tire radial direction RD and in the tire width direction WD. The first coupling portion 31 and the second coupling portion 32 are formed into such an elongated plate shape.

In this way, even if the plate thickness t is reduced, the first coupling portion 31 and the second coupling portion 32 can obtain desired rigidity by setting the plate width w to be wide. Therefore, the durability can be improved. Moreover, the number of first coupling portions 31 and the number of second coupling portions 32 are increased while thinning the plate thickness **t.** In this way, gaps between the coupling portions adjacent to one another in the tire circumferential direction CD can be reduced while maintaining the rigidity of the entire tire. Therefore, the dispersion of the ground contact pressure during the tire rolling can be reduced.

Although the thickness **t** is not particularly limited, the thickness **t** is appropriately set from the viewpoints of reducing the weight and improving the durability while sufficiently transmitting force from the inner annular portions 1 and the outer annular portions 2. Although the plate width W is not particularly limited, the plate width **w** is appropriately set from the viewpoints of reducing the weight and improving the durability while sufficiently transmitting force from the inner annular portions 1 and the outer annular portions 2.

The first coupling portion 31 includes an inner connecting portion 31a connected to the inner annular portion 1 and an outer connecting portion 3 1b connected to the outer annular portion 2.

Although a shape of the inner connecting portion 31a is not particularly limited, the inner connecting portion 31a is formed into a rectangular shape in the present embodiment. A longitudinal direction of the inner connecting portion 31a is parallel to the tire width direction WD. Note that the longitudinal direction of the inner connecting portion 31a does not have to be parallel to the tire width direction WD, and for example, may intersect the tire width direction WD.

Although a shape of the outer connecting portion 31b is not particularly limited, the outer connecting portion 31b is formed into a rectangular shape in the present embodiment. A longitudinal direction of the outer connecting portion 31b is parallel to the tire width direction WD. Note that the longitudinal direction of the outer connecting portion 3 1b does not have to be parallel to the tire width direction WD, and for example, may intersect the tire width direction WD.

A tread surface 4a of the tread 4 of the present embodiment is parallel to the tire width direction WD and is flat from one end to the other end in the tire width direction WD. The tread surface 4a of the tread 4 does not necessarily have to be flat and may have a curvature.

However, the curvature of the tread surface 4a is preferably small, and for example, a radius of curvature of the tread surface 4a is preferably 490 mm or more, more preferably 810 mm or more. The radius of curvature here is a radius of curvature when the tread surface 4a has one curvature, or is a radius of curvature of a curvature closest to the tire equatorial plane when the tread surface 4a has a plurality of curvatures along the tire width direction WD.

Moreover, a difference between a maximum outer diameter and minimum outer diameter of the tread surface 4a is preferably 10 mm or less, more preferably 6 mm or less. Usually, the maximum outer diameter of the tread surface 4a is an outer diameter of the tread surface 4a on the tire equatorial plane, and the minimum outer diameter of the tread surface 4a is an outer diameter of the tread surface 4a on both ends in the tire width direction WD.

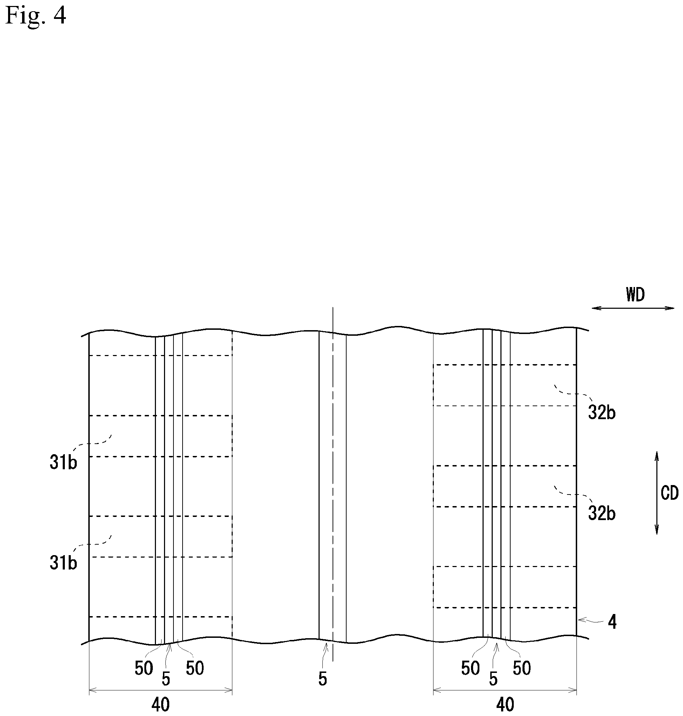

FIG. 4 is a view of the tread 4 when viewed from an outer circumference thereof. Portions shown by broken lines in FIG. 4 are outer connecting portions 31b and 32b. The tread 4 includes annular connecting portion regions 40 and 40 located outward of the outer connecting portions 31b and 32b in the tire radial direction. The connecting portion regions 40 and 40 overlap the outer connecting portions 31b and 32b in the tire radial direction RD when viewed from the tire circumferential direction CD.

A plurality of grooves is formed on the outer circumferential surface of the tread 4. In the present embodiment, three main grooves 5 extending in the tire circumferential direction CD are formed. The main groove 5 is formed on a center of the tread 4 in the tire width direction WD and on the connecting portion regions 40 and 40. The main grooves 5 may be aligned with the tire circumferential direction CD, may be inclined with respect thereto, or may be zigzag as long as extending in the tire circumferential direction CD.

Lateral grooves extending in the tire width direction WD may be formed on the outer circumferential surface of the tread 4. The lateral grooves may be aligned with the tire width direction WD or may be inclined with respect thereto as long as extending in the tire width direction WD.

Cross sections of the main grooves 5 have a rectangular shape. However, the cross sections of the main grooves 5 are not limited to such a rectangular shape, and may have a trapezoidal shape in which groove bottoms are narrower than groove openings. Each of the main grooves 5 includes groove sidewalls 5a and 5a extending along the tire radial direction RD, and a groove bottom 5b coupling inner ends of both of the groove sidewalls 5a in the tire radial direction to each other. The groove sidewalls 5a and 5a are flat surfaces passing through an end of the groove opening and an end of the groove bottom 5b.

The main groove 5 includes protrusions 50 protruding inward of the groove from the groove sidewalls 5a. The main groove 5 includes the protrusions 50 individually protruding from both of the groove sidewalls 5a. In the present embodiment, among the three main grooves 5, only the main grooves 5 located on the connecting portion regions 40 and 40 include the protrusions 50.

The main grooves 5 include the protrusions 50, whereby stones can be suppressed from entering the main groove from the groove openings, and the stone holding can be suppressed. Moreover, the main grooves 5 include the protrusions 50, whereby, even if stones enter the same, a direct contact between the groove sidewalls 5a and the stones can be prevented, and a crack in the groove sidewalls 5a can be prevented.

Further, the protrusions 50 also have a function to discharge a stone that has entered each of the main grooves 5. When the tread surface 4a of the tread 4 has a curvature like a general pneumatic tire, stones are caught in the main groove 5 due to narrowing of a groove width of the main groove 5 when the tire touches the ground, but as the tire rolls, a groove width of the main groove 5 returns to an original value thereof, and the stones are discharged by centrifugal force.

On the other hand, when the tread surface 4a of the tread 4 is flat or substantially flat, the groove width of the main groove 5 is almost the same no matter whether or not the tire touches the ground, and accordingly, force to discharge the held stones is weak, but the discharge of the stones can be urged by the protrusions 50.

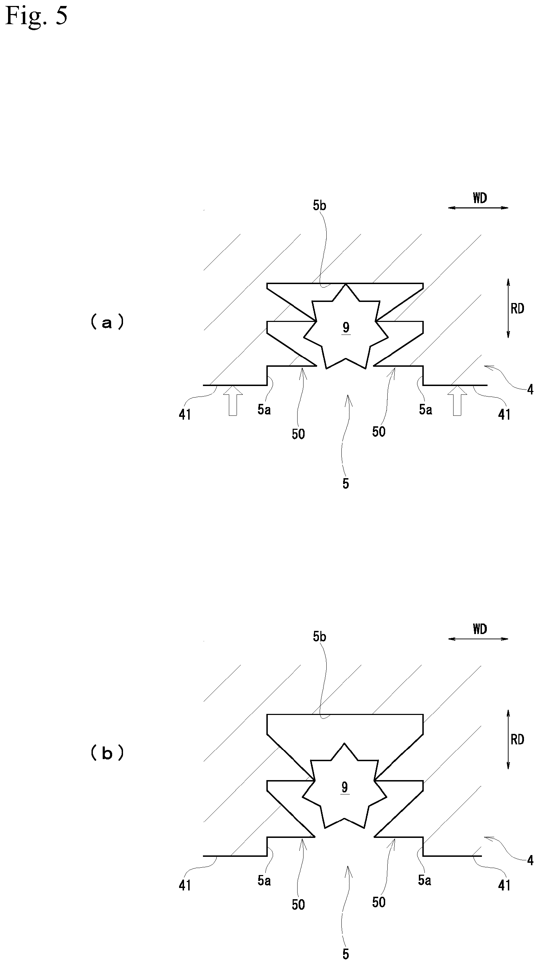

A specific function to discharge a stone by the protrusions 50 will be described with reference to FIG. 5. When the tread surface 4a of the tread 4 is flat or substantially flat, the groove width of the main groove 5 is almost unchanged when the tire touches the ground, and as shown in FIG. 5(a), lands 41 on both sides of the main groove 5 are compressed in the tire radial direction RD.

Along with this, the protrusions 50 are moved inward (toward the groove bottom) in the tire radial direction and enter an inside of a stone 9 in the tire radial direction. Thereafter, when a compression load on the lands 41 is released as the tire rolls, the protrusions 50 are moved outward (toward the opening) in the tire radial direction as shown in FIG. 5(b), and exert the function to discharge the stone 9.

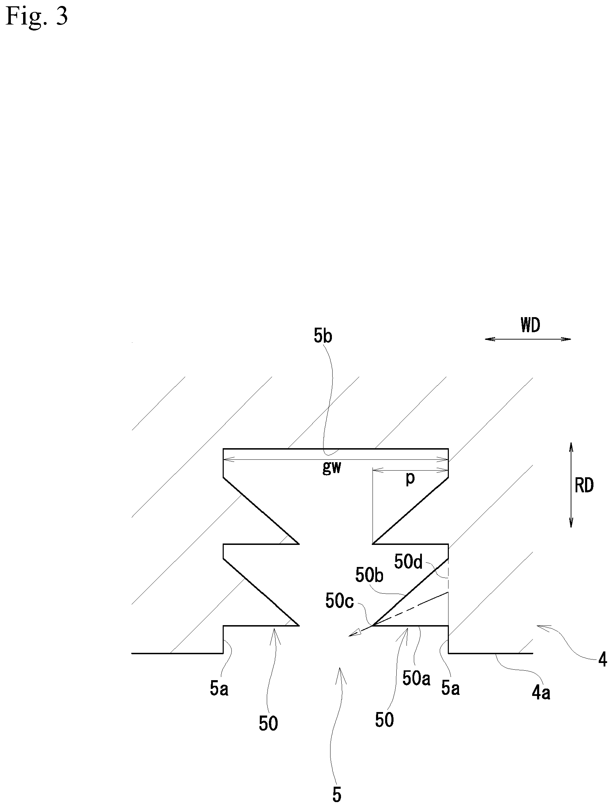

As shown in FIG. 3, a cross section of each of the protrusions 50 is triangular, and the protrusion 50 includes a protrusion outer surface 50a facing outward in the tire radial direction and a protrusion inner surface 50b facing inward in the tire radial direction. The protrusion outer surface 50a is substantially parallel to the tire width direction WD.

On the other hand, the protrusion inner surface 50b is inclined so as to approach the groove sidewall 5a toward the groove bottom 5b with respect to the tire radial direction RD corresponding to a depth direction of the main groove 5. That is, the protrusion 50 is provided so that the groove width becomes wider toward the groove bottom 5b by the protrusion inner surface 50b.

The protrusion 50 protrudes toward the opening of the main groove 5. In other words, a protrusion direction of the protrusion 50 (indicated by an arrow in FIG. 3) is inclined with respect to the tire width direction WD so as to approach the groove opening toward a tip 50c of the protrusion 50. The protrusion direction of the protrusion 50 is a direction from a center of a proximal end 50d toward a center of the tip 50c. The protrusion 50 protrudes toward the opening of the main groove 5, whereby the protrusion 50 becomes a "guard" and can effectively suppress the entrance of a stone, while a stone that has entered the main groove 5 is easily discharged.

The main groove 5 may include a plurality of the protrusions 50 along the depth direction of the main groove 5. In the present embodiment, cross sections of the plurality of protrusions 50 have a sawtooth shape. The plurality of protrusions 50 may have the same shape or may have different shapes from one another. For example, the protrusion 50 closer to the opening of the main groove 5 may be smaller than the protrusion 50 closer to the groove bottom.

Further, when only one protrusion 50 is provided along the depth direction of the main groove 5, the entrance of a stone can be effectively suppressed if the protrusion 50 is located closer to the opening than the center of the groove sidewall 5a in the depth direction, and meanwhile, a stone can be effectively discharged if the protrusion 50 is located closer to the groove bottom than the center of the groove sidewall 5a in the depth direction.

The protrusions 50 may be continuously provided along the direction in which the main groove 5 extends. In the present embodiment, the protrusions 50 are continuously provided along the tire circumferential direction CD. However, the protrusions 50 do not have to be continuously provided along the tire circumferential direction CD, and may be provided intermittently. For example, one protrusion 50 may be provided for each repeating pitch of a tread pattern.

A length (protrusion amount) p from the groove sidewall 5a to the tip 50c is preferably 20 % or more, more preferably 30 % or more of the groove width gw. Further, the protrusion amount p is preferably 45 % or less, more preferably 40 % or less of the groove width gw.

As described above, the non-pneumatic tire T according to the present embodiment includes: the inner annular portion 1; the outer annular portion 2 provided concentrically on the outer side of the inner annular portion 1; the plurality of coupling portions 3 coupling the inner annular portion 1 and the outer annular portion 2 to each other; the tread 4 provided on the outer side of the outer annular portion 2; and the main groove 5 formed on the tread 4, wherein the main groove 5 includes the protrusions 50 protruding inward of the groove from the groove sidewall 5a.

According to this non-pneumatic tire T, the main grooves 5 include the protrusions 50, whereby a stone can be suppressed from entering the main groove from each of the groove openings, and the stone holding can be suppressed.

Further, in the non-pneumatic tire T according to the present embodiment, the protrusions 50 may be configured to protrude toward the opening of each of the main grooves 5. With this configuration, the protrusion 50 becomes a "guard" and can effectively suppress the entrance of a stone, while a stone that has entered the main groove 5 is easily discharged.

Further, in the non-pneumatic tire T according to the present embodiment, the main groove 5 may include a plurality of the protrusions 50 along the groove depth direction. With this configuration, a stone can be effectively suppressed from entering the main groove from the groove opening.

Further, in the non-pneumatic tire T according to the present embodiment, the main groove 5 may include protrusions 50 protruding from both of the groove sidewalls 5a. With this configuration, a stone can be effectively be prevented from entering the main groove from the groove opening.

Further, in the non-pneumatic tire T according to the present embodiment, the main grooves 5 including the protrusions 50 may be formed in the connecting portion regions 40 located on the outer side in the tire radial direction of the outer connecting portions 31b and 32b of the coupling portions 3 and the outer annular portion 2.

Since the ground contact pressure is high in the connecting portion regions 40 located on the outer side of the outer connecting portions 31b and 32b in the tire radial direction, damage due to the stone holding is likely to increase. Therefore, the main grooves 5 formed on the connecting portion regions 40 include the protrusion 50, whereby it is possible to focus on measures against the stone holding in the connecting portion regions 40.

Further, in the non-pneumatic tire T according to the present embodiment, the protrusions 50 may be continuously provided along the extending direction of the main grooves 5. With this configuration, the stone holding can be effectively suppressed in the entire tire.

The non-pneumatic tire is not limited to the configuration of the above-described embodiments, and is not limited to the above-described functions and effects.

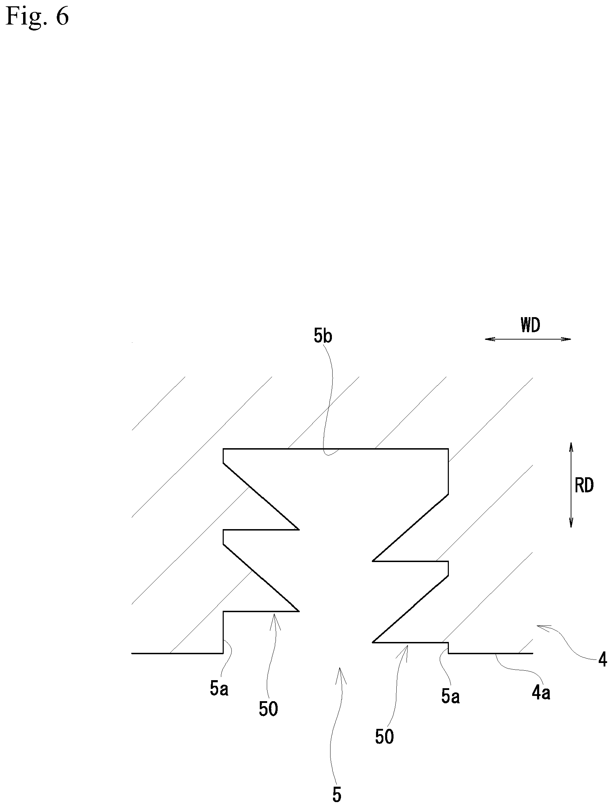

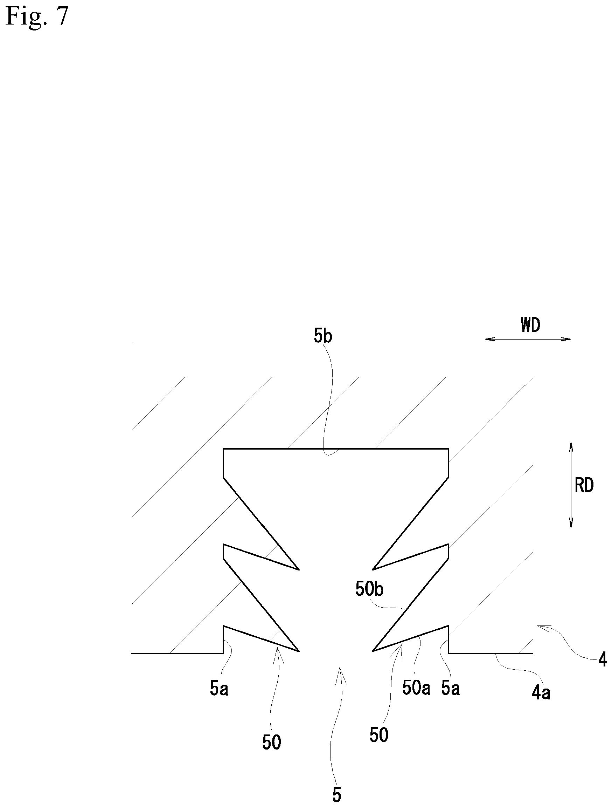

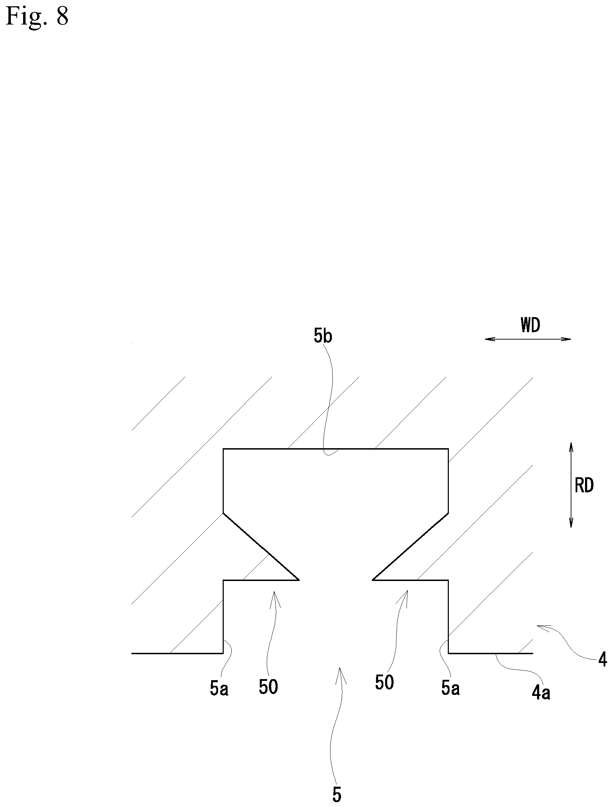

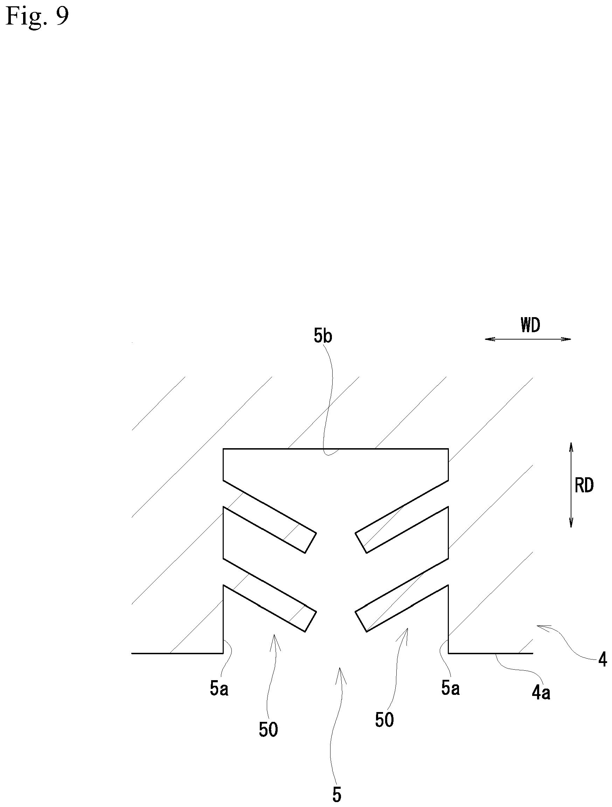

(1) In the non-pneumatic tire T according to the above embodiment, the protrusions 50 and 50 protruding from both of the groove sidewalls 5a and 5a are provided at the same positions in the depth direction of each of the main grooves 5, but the present invention is not limited to this. For example, as shown in FIG. 6, the protrusions 50 and 50 protruding from both of the groove sidewalls 5a and 5a may be provided at different positions in the depth direction of the main groove 5.
(2) Further, in the non-pneumatic tire T according to the above embodiment, the protrusion outer surface 50a of the protrusion 50 is substantially parallel to the tire width direction WD, but the present invention is not limited to this. For example, as shown in FIG. 7, similarly to the protrusion inner surface 50b, the protrusion outer surfaces 50a may be inclined with respect to the tire radial direction RD so as to approach the groove sidewalls 5a toward the groove bottom 5b. With this configuration, a stone can be effectively prevented from entering the main groove from the groove opening.
(3) Further, in the non-pneumatic tire T according to the above embodiment, the main groove 5 includes a plurality of the protrusions 50 along the groove depth direction of the main groove 5, but the present invention is not limited to this. For example, as shown in FIG. 8, the main groove 5 may include only one protrusion 50 in the depth direction of the main groove 5.
   When a plurality of the protrusions 50 is provided, the protrusion 50 on the outer side in the tire radial direction may hinder the function to discharge a stone by the protrusions 50 formed on the inner side in the tire radial direction, but the one protrusion 50 does not hinder such a discharge function.
(4) Further, in the non-pneumatic tire T according to the above embodiment, the cross section of the protrusion 50 is triangular, but the present invention is not limited to this. For example, as shown in FIG. 9, the cross section of the protrusion 50 may be rectangular.
(5) Further, in the non-pneumatic tire T according to the above embodiment, the protrusions 50 are continuously provided along the extending direction of the main groove 5, but the present invention is not limited to this. Drainage can be ensured by intermittently providing the protrusions 50 along the extending direction of the main groove 5. Further, the protrusions 50 may be provided mainly near an intersection of the main groove 5 and an auxiliary groove.
(6) Further, in the non-pneumatic tire T according to the above embodiment, the main groove 5 formed on the center of the tread 4 in the tire width direction does not have the protrusion 50, but may have the protrusion 50. At this time, the main groove 5 on the center of the tread 4 in the tire width direction may include only one protrusion 50 in the depth direction of the main groove 5, and the main groove 5 of each of the connecting portion regions 40 may include a plurality of the protrusions 50 in the depth direction of the main groove 5. Further, the auxiliary groove may include the protrusion 50.
(7) Further, in the non-pneumatic tire T according to the above embodiment, the plurality of coupling portions 3 are configured such that the first coupling portions 31 and the second coupling portions 32 are arrayed along the tire circumferential direction CD, but the shape of the coupling portions 3 is not particularly limited. For example, the coupling portions 3 may have a rectangular plate shape or the like which couples the inner annular portion 1 and the outer annular portion 2 to each other.

### DESCRIPTION OF REFERENCE SIGNS

- T: Non-pneumatic tire
- SS: Support structure
- 1: Inner annular portion
- 2: Outer annular portion
- 3: Coupling portion
- 4: Tread
- 4a: Tread surface
- 5: Main groove
- 5a: Groove sidewall
- 5b: Groove bottom
- 31: First coupling portion
- 31a: Inner connecting portion
- 31b: Outer connecting portion
- 32: Second coupling portion
- 32b: Outer connecting portion
- 40: Connecting portion region
- 41: Land
- 50: Protrusion
- 50a: Protrusion outer surface
- 50b: Protrusion inner surface
- 50c: Tip
- 50d: Proximal end
- CD: Tire circumferential direction
- RD: Tire radial direction
- WD: Tire width direction

## Claims

1. A non-pneumatic tire (T) comprising:
- an inner annular portion (1);
- an outer annular portion (2) provided concentrically on an outer side of the inner annular portion (1);
- a plurality of coupling portions (3, 31, 32) coupling the inner annular portion (1) and the outer annular portion (2) to each other;
- a tread (4) provided on an outer side of the outer annular portion (2);
wherein the plurality of coupling portions (3) comprises a plurality of first coupling portions (31) and a plurality of second coupling portions (32), which are alternately arrayed with each other along the tire circumferential direction (CD),
wherein each of the first coupling portions (31) is extended from one side (WD1) in the tire width direction of the inner annular portion (1) toward other side (WD2) in the tire width direction of the outer annular portion (2) and each of the second coupling portions (32) is extended from the other side (WD2) in the tire width direction of the inner annular portion (1) toward the one side (WD1) in the tire width direction of the outer annular portion 2, in a way that the first coupling portion (31) and the second coupling portion (32), which are adjacent to each other, are disposed in a substantially X shape when viewed from the tire circumferential direction (CD),
wherein each of the plurality of first coupling portions (31) includes an inner connecting portion (3 1a) connected to the inner annular portion (1) and an outer connecting portion (31b) connected to the outer annular portion (2) and each of the plurality of second coupling portions (32) includes an inner connecting portion (32a) connected to the inner annular portion (1) and an outer connecting portion (32b) connected to the outer annular portion (2),
wherein the tread (4) includes a first annular connecting portion region (40), which overlaps the outer connecting portions (31b) of the first coupling portions (31) in the tire radial direction RD when viewed from the tire circumferential direction (CD) and a second connecting portion region (40), which overlaps the outer connecting portions (32b) of the second coupling portions (32) in the tire radial direction RD when viewed from the tire circumferential direction (CD), and
wherein the tread (4) further includes a center portion arranged between the first annular connecting portion region (40) and the second annular connecting portion region (40) of the tread (4),
**characterized in that**
three main grooves (5) extending in the tire circumferential direction (CD) are formed in the tread (4),
wherein a first circumferential main groove (5) is formed on the center of the center portion of the tread (4) in the tire width direction WD, wherein a second circumferential main groove (5) is provided in the first annular connecting portion region (40) and a third circumferential main groove (5) is provided in the second annular connecting portion region (40),
wherein only the second main groove (5) and the third main groove (5) located in the connecting portion regions (40) include protrusions individually protruding inward of the groove from both of the groove sidewalls (5a).

2. The non-pneumatic tire (T) according to claim 1,
wherein each of the protrusion (50) of the second main groove (5) and of the third main groove (5) protrudes toward an opening of the respective main groove (5).

3. The non-pneumatic tire (T) according to claim 1 or 2,
wherein the second main groove (5) includes a plurality of the protrusions (50) disposed along a groove depth direction of each of its sidewalls (5a) and wherein the third main groove (5) includes a plurality of the protrusions (50) disposed along a groove depth direction of each of its sidewalls (5a).

4. The non-pneumatic tire (T) according to one of claims 1 to 3,
wherein the protrusion (50) provided on both groove sidewalls (5a) of the second main groove (5) and the protrusions (50) provided on both groove sidewalls (5a) of the third main groove (5) are continuously provided along an extending direction of the respective main groove (5).

5. The non-pneumatic tire (T) according to one of claims 1 to 4,
wherein a cross section of the protrusion (50) has a triangular shape, and wherein the protrusion (50) includes a protrusion outer surface (50a) facing outward in a tire radial direction (RD) and a protrusion inner surface (50b) facing inward in the tire radial direction (RD), and the protrusion inner surface (50b) is inclined with respect to the tire radial direction (RD) so as to approach the groove sidewall (5a) toward a groove bottom (5b) of the groove (5).

6. The non-pneumatic tire (T) according to claim 5,
wherein the protrusion outer surface (50a) is substantially parallel to a tire width direction (WD).

7. The non-pneumatic tire (T) according to claim 5,
wherein the protrusion outer surface (50a) is inclined with respect to the tire radial direction (RD) so as to approach the groove sidewall (5a) toward the groove bottom (5b) of the groove (5).

8. The non-pneumatic tire (T) according to claim 4,
wherein the protrusions (50) protruding from both of the groove sidewalls (5a) are provided at different positions in a groove depth direction of the groove (5).

## Patentansprüche

1. Luftfreier Reifen (T), der das Folgende aufweist:
- einen inneren ringförmigen Bereich (1);
- einen äußeren ringförmigen Bereich (2), der konzentrisch an einer äußeren Seite des inneren ringförmigen Bereichs (1) angeordnet ist;
- eine Vielzahl von Verbindungsbereichen (3, 31, 32), die den inneren ringförmigen Bereich (1) und den äußeren ringförmigen Bereich (2) miteinander verbinden;
- eine Lauffläche (4), die an einer äußeren Seite des äußeren ringförmigen Bereichs (2) angeordnet ist;
wobei die Vielzahl von Verbindungsbereichen (3) eine Vielzahl von ersten Verbindungsbereichen (31) und eine Vielzahl von zweiten Verbindungsbereichen (32) aufweist, die abwechselnd zueinander entlang der Reifenumfangsrichtung (CD) angeordnet sind,
wobei sich jeder der ersten Verbindungsbereiche (31) von einer Seite (WD1) in der Reifenbreitenrichtung des inneren ringförmigen Bereichs (1) zu der anderen Seite (WD2) in der Reifenbreitenrichtung des äußeren ringförmigen Bereichs (2) erstreckt und sich jeder der zweiten Verbindungsbereiche (32) von der anderen Seite (WD2) in der Reifenbreitenrichtung des inneren ringförmigen Bereichs (1) zu der einen Seite (WD1) in der Reifenbreitenrichtung des äußeren ringförmigen Bereichs (2) erstreckt, in einer Weise, dass der erste Verbindungsbereich (31) und der zweite Verbindungsbereich (32), die benachbart zueinander sind, im Wesentlichen X-förmig zueinander angeordnet sind, wenn man sie von der Reifenumfangsrichtung (CD) aus betrachtet,
wobei jeder von der Vielzahl von ersten Verbindungsbereichen (31) einen inneren Verbindungsbereich (31a), der mit dem inneren ringförmigen Bereich (1) verbunden ist, und einen äußeren Verbindungsbereich (31b) aufweist, der mit dem äußeren ringförmigen Verbindungsbereich (2) verbunden ist, und jeder von der Vielzahl von zweiten Verbindungsbereichen (32) einen inneren Verbindungsbereich (32a), der mit dem inneren ringförmigen Bereich (1) verbunden ist, und einen äußeren Verbindungsbereich (32b) aufweist, der mit dem äußeren ringförmigen Bereich (2) verbunden ist,
wobei die Lauffläche (4) eine erste ringförmige Verbindungsbereichsregion (40) aufweist, welche mit den äußeren Verbindungsbereichen (31b) der ersten Verbindungsbereiche (31) in der Reifenradialrichtung (RD), von der Reifenumfangsrichtung (CD) aus gesehen, überlappt, und eine zweite Verbindungsbereichsregion (40) aufweist, welche mit den äußeren Verbindungsbereichen (32b) der zweiten Verbindungsbereiche (32) in der Reifenradialrichtung (RD), von der Reifenumfangsrichtung (CD) aus gesehen, überlappt, und
wobei die Lauffläche (4) ferner einen zentralen Bereich aufweist, der zwischen der ersten ringförmigen Verbindungsbereichsregion (40) und der zweiten ringförmigen Verbindungsbereichsregion (40) der Lauffläche (4) angeordnet ist,
**dadurch gekennzeichnet**,-
dass drei Hauptnuten (5), die sich in der Reifenumfangsrichtung (CD) erstrecken, in der Lauffläche (4) ausgebildet sind,
wobei eine erste Umfangs-Hauptnut (5) in der Mitte des zentralen Bereichs der Lauffläche (4) in der Reifenbreitenrichtung (WD) ausgebildet ist, wobei eine zweite Umfangs-Hauptnut (5) in der ersten ringförmigen Verbindungsbereichsregion (40) angeordnet ist und eine dritte Umfangs-Hauptnut (5) in der zweiten ringförmigen Verbindungsbereichsregion (40) angeordnet ist,
wobei nur die zweite Hauptnut (5) und die dritte Hauptnut (5), die sich in den Verbindungsbereichsregionen (40) befinden, Vorsprünge aufweisen, die von beiden Nutseitenwänden (5a) einzeln ins Innere der Nut hervorstehen.

2. Luftfreier Reifen (T) nach Anspruch 1,
wobei jeder der Vorsprünge (50) der zweiten Hauptnut (5) und der dritten Hauptnut (5) in Richtung einer Öffnung der jeweiligen Hauptnut (5) hervorsteht.

3. Luftfreier Reifen (T) nach Anspruch 1 oder 2,
wobei die zweite Hauptnut (5) eine Vielzahl der Vorsprünge (50) aufweist, die entlang einer Nuttiefenrichtung der jeweiligen ihrer Seitenwände (5a) angeordnet sind, und wobei die dritte Hauptnut (5) eine Vielzahl der Vorsprünge (50) aufweist, die entlang einer Nuttiefenrichtung der jeweiligen ihrer Seitenwände (5a) angeordnet sind.

4. Luftfreier Reifen (T) nach einem der Ansprüche 1 bis 3,
wobei der Vorsprung (50), der auf beiden Nutseitenwänden (5a) der zweiten Hauptnut (5) angeordnet ist, und die Vorsprünge (50), die auf beiden Nutseitenwänden (5a) der dritten Hauptnut (5) angeordnet sind, kontinuierlich entlang einer Erstreckungsrichtung der jeweiligen Hauptnut (5) angeordnet sind.

5. Luftfreier Reifen (T) nach einem der Ansprüche 1 bis 4,
wobei ein Querschnitt des Vorsprungs (50) eine dreieckige Form hat, und wobei der Vorsprung (50) eine Vorsprungs-Außenfläche (50a), die in einer Reifenradialrichtung (RD) nach außen gerichtet ist, und eine Vorsprungs-Innenfläche (50b) aufweist, die in der Reifenradialrichtung (RD) nach innen gerichtet ist, und die Vorsprungs-Innenfläche (50b) in Bezug auf die Reifenradialrichtung (RD) so geneigt ist, dass sie sich der Nutseitenwand (5a) zu einem Nutboden (5b) der Nut (5) hin annähert.

6. Luftfreier Reifen (T) nach Anspruch 5,
wobei die Vorsprungs-Außenfläche (50a) im Wesentlichen parallel zu einer Reifenbreitenrichtung (WD) verläuft.

7. Luftfreier Reifen (T) nach Anspruch 5,
wobei die Vorsprungs-Außenfläche (50a) in Bezug auf die Reifenradialrichtung (RD) geneigt ist, so dass sie sich der Nutseitenwand (5a) in Richtung des Nutbodens (5b) der Nut (5) hin annähert.

8. Luftfreier Reifen (T) nach Anspruch 4,
wobei die Vorsprünge (50), die von beiden Nutseitenwänden (5a) vorstehen, an unterschiedlichen Positionen in einer Nuttiefenrichtung der Nut (5) angeordnet sind.

## Revendications

1. Bandage non pneumatique (T) comprenant :
- une portion annulaire intérieure (1) ;
- une portion annulaire extérieure (2) prévue de manière concentrique sur un côté extérieur de la portion annulaire intérieure (1) ;
- une pluralité de portions de couplage (3, 31, 32) qui couplent la portion annulaire intérieure (1) et la portion annulaire extérieure (2) l'une à l'autre ;
- une bande de roulement (4) prévue sur un côté extérieur de la portion annulaire extérieure (2) ;
dans lequel la pluralité de portions de couplage (3) comprennent une pluralité de premières portions de couplage (31) et une pluralité de secondes portions de couplage (32), qui sont agencées en alternance l'une par rapport à l'autre le long de la direction circonférentielle du pneumatique (CD), dans lequel chacune des premières portions de couplage (31) s'étend depuis un côté (WD1) dans la direction de la largeur du pneumatique de la portion annulaire intérieure (1) vers un autre côté (WD2) dans la direction de la largeur du pneumatique de la portion annulaire extérieure (2) et chacune des secondes portions de couplage (32) s'étend depuis l'autre côté (WD2) dans la direction de la largeur du pneumatique de la portion annulaire intérieure (1) vers ledit un côté (WD1) dans la direction de la largeur du pneumatique de la portion annulaire extérieure (2), de telle sorte que la première portion de couplage (31) et la seconde portion de couplage (32), qui sont adjacentes l'une à l'autre, sont disposées dans une forme sensiblement en X dans une vue depuis la direction circonférentielle du pneumatique (CD),
dans lequel chacune la pluralité de premières portions de couplage (31) inclut une portion de connexion intérieure (31a) connectée à la portion annulaire intérieure (1) et une portion de connexion extérieure (31b) connectée à la portion annulaire extérieure (2) et chacune de la pluralité de secondes portions de couplage (32) inclut une portion de connexion intérieure (32a) connectée à la portion annulaire intérieure (1) et une portion de connexion extérieure (32b) connectée à la portion annulaire extérieure (2), dans lequel la bande de roulement (4) inclut une première région de portion de connexion annulaire (40), qui recouvre partiellement les portions de connexion extérieures (31b) des premières portions de couplage (31) dans la direction radiale du pneumatique RD dans une vue depuis la direction circonférentielle du pneumatique (CD), et une seconde région de portion de connexion (40), qui recouvre partiellement les portions de connexion extérieures (32b) des secondes portions de couplage (32) dans la direction radiale du pneumatique RD dans une vue depuis la direction circonférentielle du pneumatique (CD), et
dans lequel la bande de roulement (4) inclut en outre une portion centrale agencée entre la première région de portion de connexion annulaire (40) et la seconde région de portion de connexion annulaire (40) de la bande de roulement (4),
**caractérisé en ce que**
trois rainures principales (5) s'étendant dans la direction circonférentielle du pneumatique (CD) sont formées dans la bande de roulement (4),
dans lequel une première rainure principale circonférentielle (5) est formée sur le centre de la portion centrale de la bande de roulement (4) dans la direction de la largeur du pneumatique WD, dans lequel une deuxième rainure principale circonférentielle (5) est prévue dans la première région de portion de connexion annulaire (40) et une troisième rainure principale circonférentielle (5) est prévue dans la seconde région de portion de connexion annulaire (40), dans lequel uniquement la deuxième rainure principale (5) et la troisième rainure principale (5) situées dans les régions de portions de connexion (40) incluent des projections qui se projettent individuellement vers l'intérieur de la rainure depuis les deux parois latérales de rainure (5a).

2. Bandage non pneumatique (T) selon la revendication 1,
dans lequel chacune des projections (50) de la deuxième rainure principale (5) et de la troisième rainure principale (5) se projette vers une ouverture de la rainure principale respective (5).

3. Bandage non pneumatique (T) selon la revendication 1 ou 2,
dans lequel la deuxième rainure principale (5) inclut une pluralité des projections (50) disposées le long d'une direction de profondeur de rainure de chacune de ses parois latérales (5a) et dans lequel la troisième rainure principale (5) inclut une pluralité des projections (50) disposées le long d'une direction de profondeur de rainure de chacune de ses parois latérales (5a).

4. Bandage non pneumatique (T) selon l'une des revendications 1 à 3,
dans lequel la projection (50) prévue sur les deux parois latérales de rainure (5a) de la deuxième rainure principale (5) et projection (50) prévue sur les deux parois latérales de rainure (5a) de la troisième rainure principale (5) sont prévues en continu le long d'une direction d'extension de la rainure principale respective (5).

5. Bandage non pneumatique (T) selon l'une des revendications 1 à 4,
dans lequel une section transversale de la projection (50) a une forme triangulaire, et
dans lequel la projection (50) inclut une surface extérieure de projection (50a) tournée vers l'extérieur dans une direction radiale du pneumatique (RD) et une surface intérieure de projection (50b) tournée vers l'intérieur dans la direction radiale du pneumatique (RD), et la surface intérieure de projection (50b) est inclinée par rapport à la direction radiale du pneumatique (RD) de manière à se rapprocher de la paroi latérale de rainure (5a) vers un fond de rainure (5b) de la rainure (5).

6. Bandage non pneumatique (T) selon la revendication 5,
dans lequel la surface extérieure de projection (50a) est sensiblement parallèle à une direction de la largeur du pneumatique (WD).

7. Bandage non pneumatique (T) selon la revendication 5,
dans lequel la surface extérieure de projection (50a) est inclinée par rapport à la direction radiale du pneumatique (RD) de manière à se rapprocher de la paroi latérale de rainure (5a) vers le fond de rainure (5b) de la rainure (5).

8. Bandage non pneumatique (T) selon la revendication 4,
dans lequel les projections (50) se projetant depuis les deux parois latérales de rainure (5a) sont prévues à des positions différentes dans une direction de profondeur de rainure de la rainure (5).
